# EUROPÄISCHE PATENTSCHRIFT

(11) **EP 0 500 997 B1**
(45) Veröffentlichungstag und Bekanntmachung des Hinweises auf die Patenterteilung: **14.06.1995**
(21) Anmeldenummer: 91103100.3
(22) Anmeldetag: 01.03.1991
(51) Int. Cl.: H02H 7/08, G01R 31/34, G05B 19/05

(54) **Anordnung zur Beeinflussung von Schaltgeräten**
Switchgear influencing device
Dispositif pour influencer des commutateurs

(43) Veröffentlichungstag der Anmeldung: 02.09.1992
(73) Patentinhaber: SIEMENS AKTIENGESELLSCHAFT, 80333 München (DE)
(72) Erfinder: Freitag, Dieter, Dr., W-8450 Amberg (DE); Jähne, Hans-Joachim, Dr.-Ing., W-8450 Amberg (DE)

(56) Entgegenhaltungen:
- EP-A- 0 215 979
- EP-A- 0 278 802
- DE-A- 2 920 055
- DE-A- 3 607 675
- GB-A- 174 359
- GB-A- 2 150 774
- SOVIET INVENTIONS ILLUSTRATED, Derwent Publications, week 8901, abstract no.005904, X13 &SU-A-1403203 (MELITOPOL AGRIC MEC) 15.06.88

## Beschreibung

Die Erfindung bezieht sich auf eine Anordnung zur Beeinflussung von Schaltgeräten, die einzelnen Antriebs-Komponenten sowie Antriebsblöcken, in denen einige Antriebs-Komponenten zusammengefaßt sind, vorgeschaltet sind, so daß wahlweise einzelne Antriebs-Komponenten oder Antriebsblöcke ab- und zuschaltbar sind, wobei dies in Abhangigkeit von Netzzustandsdaten mittels Stromerfassungsmitteln und einer Auswertungseinrichtung erfolgt. Eine solche Anordnung ist aus der EP-A-0 278 802 bekannt.

Bei einer bekannten Anordnung (DE-OS 36 26 399) werden die Netzzustandsdaten durch eine Fremdspannungseinspeisung mit nachgeschalteter Auswerteschaltung und Soll-Ist-Wert-Vergleich ermittelt. Bei Vorliegen eines Fehlers wird das Schaltgerät blockiert, so daß ein Anschalten des Netzteiles an das Netz verhindert wird (Nichteinschalten bestehender Kurzschlüsse).

Zur schnellen Erkennung von Kurzschlüssen und zur Erzeugung eines elektrischen Auslösebefehls (DE-OS 36 26 400) ist es weiterhin bekannt, eine Meßanordnung zu benutzen, die die zeitlichen Verläufe des Stromes als auch der Spannung des Netzes mißt und daraus die komplexen Impedanzen und Leistungen ermittelt. Durch eine derartige Anordnung ist es möglich, einen einzelnen Antrieb zur Beschädigung zu schützen (Früherkennung von entstehenden Kurzschlüssen).

In der DE 36 07 675 ist eine Anordnung der eingangs genannten Art beschrieben. Zum Fehlerschutz für einen Mittelspannungs-Trafoabzweig wird nur ein Lastschalter angewandt, d.h. auf sonst übliche Sicherungen wird verzichtet. Der Lastschalter ist so ausgelegt, daß er im unteren Fehlerschutzbereich vorkommende Störungen selbst unterbricht, während größere Fehlerströme, wie sie u.a. bei Kurzschüssen in der Primärzuleitung des Trafos vorkommen, von einem übergeordneten, für einen größeren Netzteil vorgesehenen Leistungsschalter abgeschaltet werden, während der Lastschalter den fehlerbehafteten Abzweig unmittelbar danach stromlos abtrennt.

Der vorliegenden Erfindung liegt die Aufgabe zugrunde, einen hinreichenden Schutz bei komplexen Fertigungseinrichtungen bzw. komplexen Prozeßantrieben zu gewährleisten, der hohe Folgeschäden bei Ausfall bzw. bei singulärer Schutzauslösung. vermeidet. Gedacht ist hier in erster Linie an Walzstraßen, Druckmaschinen, Fertigungsstraßen auf dem Automobilsektor oder auch vernetzte Prozesse im Bereich der Chemie oder Energie. Dies wird auf einfache Weise dadurch erreicht, daß die Auswertungseinrichtung in Wirkverbindung mit einer Prozeßoptimierungseinrichtung steht, die die Schaltgeräte prozeßoptimiert auslöst. Als einfache Auswertung für die einzelnen Antriebskomponenten hat es sich herausgestellt, wenn die Auswertung eine Schwellwertauswertung des über einen Schwellwertsensor ermittelten Stromes ist. Um zusätzlich auch entstehende Fehler rechtzeitig kennenzulernen, ist es von Vorteil, wenn der Auswertung eine Einrichtung zur Anzeige für entstehende Fehler und/oder prospektive Wartungshinweise für die Antriebsmaschinen nachgeschaltet ist. Um ernsthafte Gefahren bei der Überlastung einer Antriebskomponente zu vermeiden ist es vorteilhaft, wenn die Restlaufzeit einer Antriebsmaschine bei der prozeßbedingten notwenidgen Überlastung in Abhängigkeit der Isolierstofflebensdauer der Antriebsmaschine und durch Abzug der Laufzeit der Antriebsmaschine bei bisher ermittelten Temperaturen und bekannten Betriebsbedingungen bestimmt ist. Außerdem ist es für die Ermittlung der Restlebensdauer von Vorteil, wenn als Alterungskriterium die Auswertung der Strangströme nach Betrag und Phase (als Abweichung vom Nennzustand - die sogenannte teach-in-Methode) oder die Bewertung der Strangimpedanzen, d.h. im wesentlichen deren Veränderungen, z.B. durch Einprägen eines niederfrequenten Netzsignals, benutzt werden. Entsprechend dem notwendigen Notprozeßablauf wird im allgemeinen die ermittelte mögliche Restlaufzeit des Antriebsmotors nicht überschritten. Um mit einem geringen Schaltgeräteaufwand auszukommen, ist es von Vorteil, wenn den Antriebskomponenten eines Antriebsblockes ein gemeinsamer Leistungsschalter und den einzelnen Antriebskomponenten Nennlast schaltende, fernbetätigbare Schaltgerät, vorzugsweise Schütze, vorgeschaltet sind. Um die analoge Stromerfassung auf einfache Weise mit einem Mikroprozessor bzw. einem Rechner verbinden zu können, ist es von Vorteil, wenn der Schwellwertauswertung eine Signalvorverarbeitung vor- und eine intelligente Peripherie nachgeschaltet ist. Um mit minimierten Verdrahtungs- und Montagekosten auszukommen, ist es weiterhin von Vorteil, wenn die Schwellwertauswertung über einen digitalen Actor-Sensorbus mit der intelligenten Peripherie und dem intelligenten Leistungsschalter verbunden ist, der seinerseits mit einer Prozeßoptimierungseinrichtung in Form einer speicherprogrammierbaren Steuerung und einer CPU in Verbindung steht. Derartige Busse und intelligente Peripherien sind beispielsweise aus der Fabrikautomatisierung mit freiprogrammierbaren Steuerungen bekannt. Um handelsübliche intelligente Leistungsschalter, wie sie beispielsweise in Form der offenen oder gekapselten Leistungsschalter für Leitungs- bzw. Motorschutz mit elektronischen Auslösern bekannt sind (Realisierung von Zeitselektivität, verzögerter Abschaltung und anderer Prozeßanpassungsfunktionen zur Systemoptimierung) verwenden zu können, ist es von Vorteil, wenn dem intelligenten Leistungsschalter eine dezentrale Signalvorverarbeitung als Kommunikationsmodul zwischen speicherprogrammierbarer Steuerung mit intelligenter Peripherie, Leistungsschalter und Auswerteeinrichtung zugeordnet ist. Um auch im Kurzschlußfall eine Antriebskomponente mit einem Schaltgerät abschalten zu können, das lediglich Nennlast schaltet, hat sich ein Verfahren zum Abschalten einer Antriebskomponente im Fehlerfall als vorteilhaft erwiesen, das darin besteht, daß ein allen Antriebskomponenten eines Antriebsblockes vorgeschalteter Leistungsschalter kurzzeitig (für ca. 15 ms) ausgeschaltet wird und danach ein nur Nennlast schaltendes, einer einzelnen Antriebskomponente zugeordnetes Schaltgerät ausgeschaltet wird und wonach ein Wiedereinschalten des Leistungsschalters erfolgt.

Anhand der Zeichnung wird ein Ausführungsbeispiel gemäß der Erfindung beschrieben.

Es zeigen:
- FIG 1: die prinzipielle Darstellung für die Steuerung prozeßmäßig mechanisch gekoppelter Antriebsblöcke, aufgeteilt in einzelne Antriebskomponenten,
- FIG 2: die Steuerung eines aus drei Antriebskomponenten bestehenden Antriebsblockes,
- FIG 3: die Ausbildung eines intelligenten Leistungsschalters mit dezentralter Signalvorverarbeitung,
- FIG 4: ein Diagramm der Lebensdauer von hochpolymeren Isolierstoffen in Abhänghängigkeit von den Betriebs- bzw. Dauergebrauchstemperaturen zur Ermittlung der Restlebensdauer einer Maschine.
- FIG 5: das Blockschaltbild eines Kommunikationsmoduls KM.

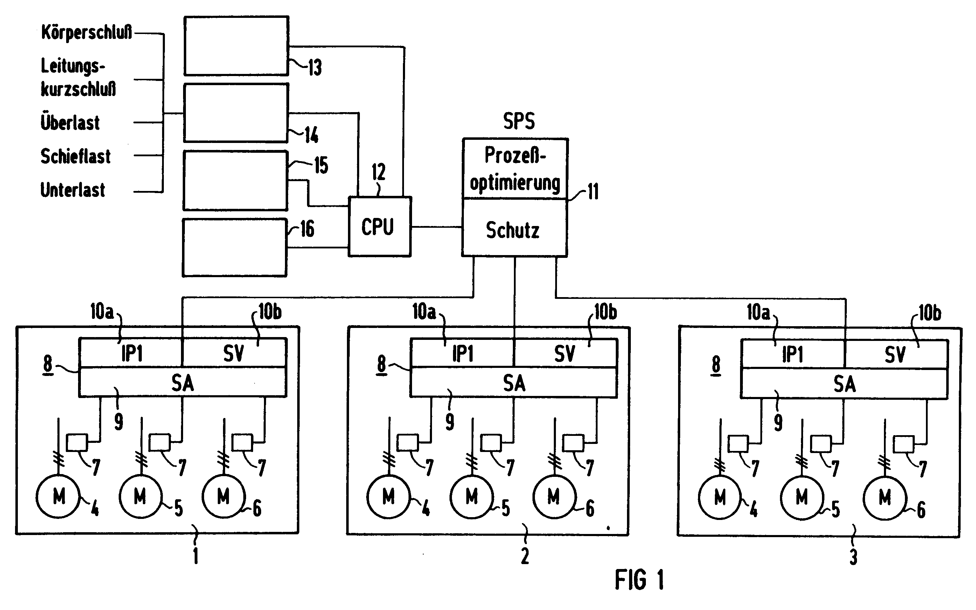

Das in der FIG 1 dargestellte Steuerkonzept beinhaltet drei Antriebsblöcke 1, 2 3 mit jeweils drei einzelnen Antriebskomponenten 4, 5, 6 in Form von Antriebsmaschinen, sowie jeder Antriebskomponente zugeordneten Schwellwertsensoren 7, die die in den Antriebsmaschinen fließenden Ströme erfassen. Zu jedem Antriebsblock 1, 2, 3 gehört auch eine Auswerteeinrichtung 8, die aus einer Signalvorverarbeitung, einer Schwellwertauswertung 9 sowie einer intelligenten Peripherie 10b besteht. Den Auswerteeinrichtungen ist eine Prozeßoptimierung 11 unter Berücksichtigung der erforderlichen Schutzeinrichtungen vorgeschaltet, die in Form einer speicherprogrammierbaren Steuerung ausgeführt werden kann, die ihrerseits mit einer CPU 12 in Verbindung steht, aus der ein Abfragedisplay 13, Warnanzeigen 14 für Körperschluß, Leitungskurzschluß, Überlast, Schieflast oder Unterlast Ausschaltungssignale 15 sowie eine Anzeige der Prozeßüberwachung 16 abgeleitet werden können.

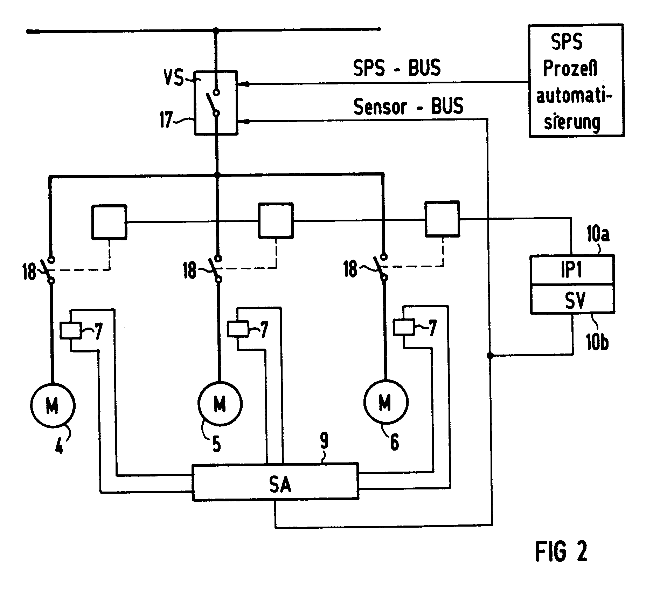

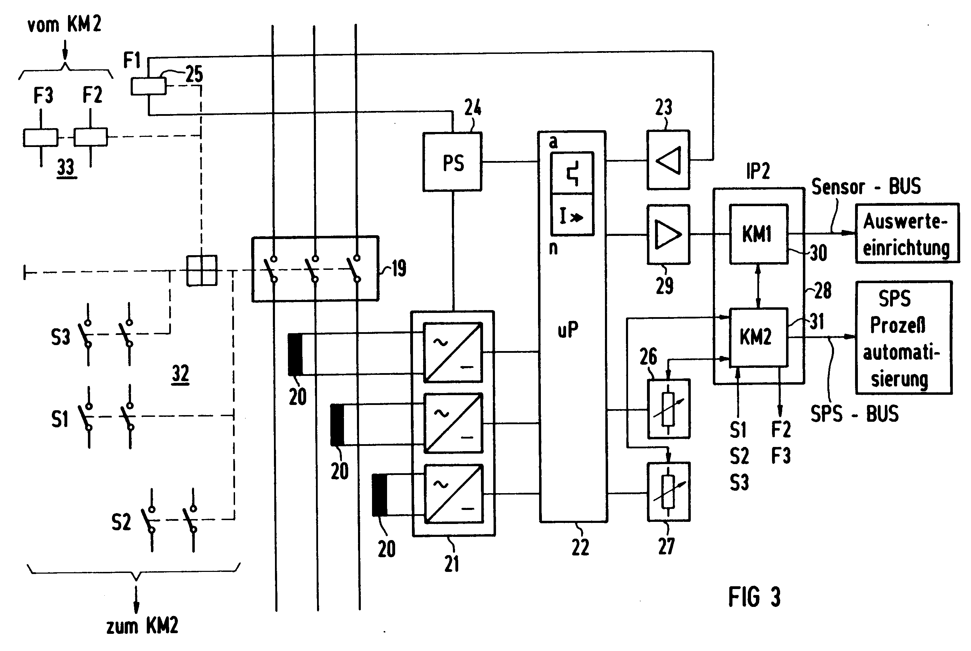

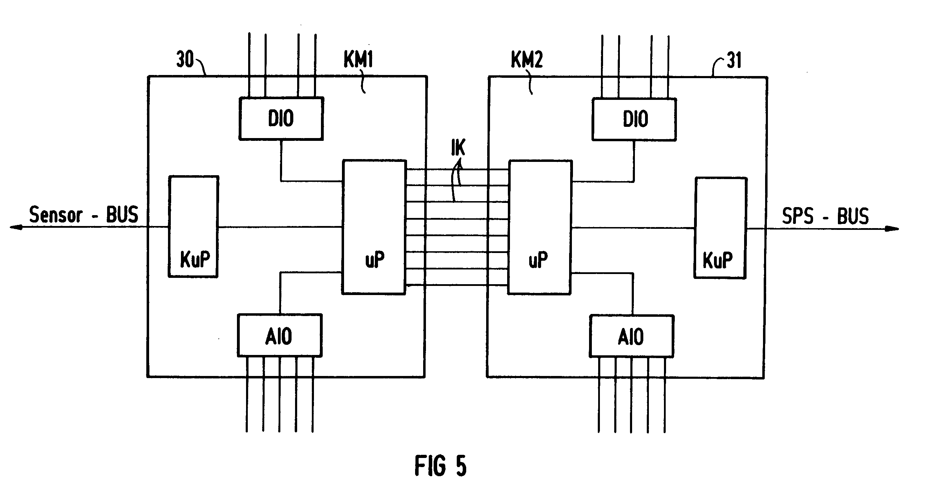

Unter der Annahme, daß die Antriebsblöcke 1 bis 3 die Antriebsblöcke einer Walzenstraße sind, stellen die Antriebskomponenten 4, 5, 6 die Antriebe für die Walzen, die Schmierung der Öllager und der Walzenkühlung dar. Bei der Prozeßoptimierung muß entschieden werden, welche Antriebskomponenten überhaupt und in welcher Reihenfolge diese abgeschaltet werden können. Dies muß in die SPS eingelesen werden. Beim Beispiel für ein Walzwerk muß zunächst der Antrieb der Walzen selber abgeschaltet werden. Danach darf die Schmierung der Öllager und erst zuletzt die Walzenkühlung selbst abgeschaltet werden. Wenn das Abschalten einzelner Komponenten nicht möglich ist, muß gegebenenfalls der komplette Antriebsblock abgeschaltet werden. Dies erfolgt über einen vorgeschalteten Leistungsschalter 17, (FIG 2), dem für die einzelnen Antriebskomponenten 4, 5, 6 Nennlast schaltende Schalter 18, beispielsweise Schütze, nachgeschaltet sind, die von der intelligenten Peripherie 10 angesteuert werden. Die Verbindung zwischen der Schwellwertauswertung der intelligenten Peripherie und dem Leistungsschalter 17 erfolgt über einen digitalen Actor-Sensor-Bus, der Reaktionszeiten vin kleiner 2 ms gewährleisten kann. Unter Reaktionszeit wird in diesem Zusammenhang die erforderliche Gesamtzeit verstanden, die aus der reinen Übertragungszeit (Laufzeit der Signale auf dem Bus) sowie den Verarbeitungszeiten und den Protokollzeiten (Ein- und Entkleidung der Daten) bestehen. Das Abschalten der Einzelkomponenten 4 bis 6 kann durch kurzzeitiges Ausschalten des Leistungsschalters und Abschalten der entsprechenden Antriebskomponenten mittels des Schützes 18 erfolgen, wonach der Leistungsschalter 17 wieder eingeschaltet werden kann und die restlichen beiden Komponenten in Betrieb bleiben. Der Leistungsschalter ist ein intelligenter Leistungsschalter(FIG 3). Er besteht aus dem eigentlichen Schaltelement 19, den Stromwandlern 20 für die einzelnen Phasen, sowie einer Gleichrichtung 21, die mit dem die normale Überlast- und Kurzschlußauslösung übernehmenden Mikroprozessor 22 verbunden ist. Über einen Verstärker 23 im Zusammenwirken mit der Energieversorgung 24 und dem Mikroprozessor 22 wird der Leistungsschalter über den Auslöser 25 (F 1) des Leistungsschalters betätigt. Über mit dem Mikroprozessor 22 verbundene Einstellorgane 26, 27 können die Auslösewerte eingestellt werden. An den bekannten Leistungsschalter ist eine intelligente Peripherie (IP 2) 28 über einen Verstärker 29 angekoppelt, der zwei Kommunikationsmodule 30, 31 beinhaltet, die untereinander kommunizieren können. Das Kommunikationsmodul (KM 1) 30 steht mit der intelligenten Peripherie (IP 1) 10 a, b in Wirkverbindung, das Kommunikationsmodul 31 (KM 2) mit der Prozeßoptimierung (SPS) 11. Weiterhin ist eine Verbindung zu Hilfsschaltern 32 des Leistungsschalters vorgesehen, die die Zustände dem Kommunikationsmodul mitteilen können. Vom Kommunikationsmodul 31 können weiterhin Impulse auf Unterspannungsauslöser 33 oder dergl. abgegeben werden. FIG 5 zeigt als Beispiel ein Blockschaltbild für eine mögliche Ausführung eines solchen Kommunikationsmoduls.

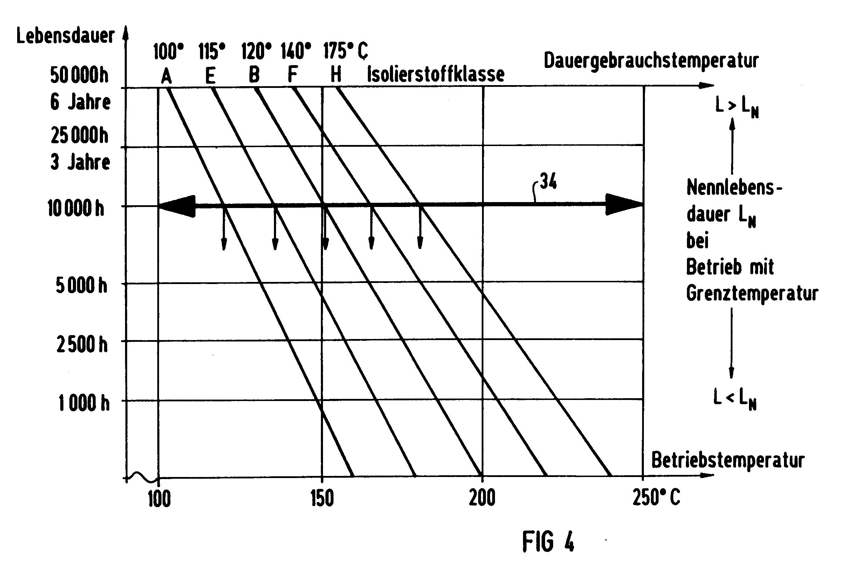

Mit der erfindungsgemäßen Anordnung sind folgende Betriebsfälle denkbar:
1. Normalbetrieb:
   Alle drei Antriebe 4, 5, 6 jedes Antriebsblockes laufen unterhalb oder mit Nennstrom.
2. Der Fehlerfall Überlast:
   Eine oder auch mehrere Maschinen laufen mit einem Strom größer Nennstrom. Die Grenze dieses Stromes muß prozeßbedingt definiert werden. Es muß je nach Bedarf eingegeben werden, ob ein 1,5-facher Nennstrom oder auch ein 2- oder 3-facher Nennstrom als Überlastgrenze und damit als Schwellwert vor gegeben wird. In diesem Fall wird über die Bewertung des bestehenden Fehlers die Restlebensdauer der Maschine ermittelt. Dies kann auf zwei unterschiedlichen physikalischen Bewertungsprinzipien im Zusammenspiel erfolgen:
   1. Veränderungen der Isolationseigenschaft hochpolymerer Isolierstoffe als Funktion der Dauereinsatztemperatur einer Maschine. Hier muß zunächst die bisherige Laufzeit der Maschine bei entsprechender Temperatur berücksichtigt werden. Durch die Überlast wird die Temperatur jedoch für die Restlaufzeit höher, d.h. die restliche Lebensdauer wird nach der bekannten Arrheniusgleichung reduziert, d.h. beim Auftreten eines Überlastfehlers kann über die intelligente Peripherie 11 bzw. die CPU 12, die mit entsprechenden Daten - siehe FIG 4 - gespeist wurde, definiert gesagt werden, wie groß die Restlebensdauer der Maschine ist.
      Zur Ermittlung der Restlebensdauer dient beispielsweise das in FIG 4 dargestellte Diagramm, das in Abhängigkeit von der Lebensdauer, Dauergebrauchstemperatur und Betriebstemperatur die Laufzeit als Funktion der Temperatur angibt. Der Lebensdauerpfeil 34 bei 25.000 Std. stellt die Nennlebensdauer bei Betrieb mit Grenztemnperatur dar, bei der mit hundertprozentiger Wahrscheinlichkeit keine Schädigung der Maschine und keine Ausfälle zu erwarten sind.
   2. Bewertung der Strangströme nach Phasenlage und Größe als Abweichung vom Neuzustand durch
      a) Auswertung der über die Laufzeit der Maschine aufgetretenen Änderungen (teach-in-Methode) oder
      b) durch die Bewertung der Strang-Impedanzen (Einprägung eines niederfrequenten Netzsignales).

   Durch beide Arten der Methode 2 werden Langzeitveränderungen erkannt, wodurch prospektive Wartungshinweise und fundierte Aussagen über die Restlebensdauer einer Maschine möglich sind.
   Durch diese beiden physikalisch unterschiedlichen Bewertungskriterien kann im Zusammenspiel eine wesentliche Entscheidung getroffen werden. Es kann ermittelt werden, wie lange eine Maschine für eine vorbestimmte Zeit mit kalkulierter Überlast betrieben werden kann, damit der Gesamtschaden für die Anlage (Gesamtschaden gleich Summe aus Komponenten- und Prozeßschaden) minimiert wird.
3. Fehlerfall Kurzschlußstrom
   Der dritte Fehlerfall bei der erfindungsgemäßen Anordnung ist der, daß eine Maschine in der Nähe eines Kurzschlußstromes, z.B. 20-fachen Nennstrom betrieben wird bzw. sogar ganz blokkiert. In diesen Fällen muß durch die Prozeßoptimierung ermittelt werden - dies ist innerhalb von 20 ms ohne weiteres möglich -, ob ein kompletter Antriebsblock abgeschaltet werden muß oder ob diese Maschine als einzelne Antriebskomponente abgetrennt werden kann. Wenn das Ergebnis der Prozeßoptimierung das Herausnehmen einer einzelnen Antriebskomponente innerhalb eines Blockes zuläßt, dann erfolgt das Abtrennen der Komponente über das Zusammenspiel des vorgeordneten Leistungsschalters 17 und des der einzelnen Antriebskomponente 4, 5, 6 zugeordneten Schaltgerätes 18. Der vorgeordnete Leistungsschalter 17 macht kurzfristig, z.B. 10 bis 20 ms auf, trennt damit alle Antriebskomponenten 4, 5, 6 vom Hauptstrang ab. In dieser Zeit kann das Schaltelement 18 der einen Antriebskomponente geöffnet werden und nach der vorgesehenen Zeit schaltet der vorgeordnete Leistungsschalter 17 die übrigen Antriebskomponenten wieder ans Netz.

Wenn die Prozeßoptimierung zum Ergebnis kommt, daß innerhalb des Antriebsblockes auf keinen Fall auf einzelne Antriebskomponenten verzichtet werden kann, muß bei Fehlerfällen, die in der Nähe des Kurzschlußstromes sind, der gesamte Antriebsblock herausgenommen werden.
Prozeßabhängig kann auch ein Notbetrieb definiert werden (z.B. bei Not-Hochdruck-Kühlungen für Kernkraftwerke), der selbst bei 20-fachem Nennstrom ein Laufen von einzelnen Maschinen - zumindest im Minutenbereich - vorsieht. Auch diese Maßnahme ist für den Sonderfall der Schadensbegrenzung und Gesamtschadenminimierung gedacht. Bei Blockierung einer Maschine sieht der Notbetrieb die Herausnahmedieser Maschine und - falls erforderlich - des gesamten Antriebsblockes vor. In diesen Fällen müssen die erforderlichen Notfunktionen automatisch entsprechend einer festgelegten Redundanz von anderen Antriebsblöcken übernommen werden.

Im Überlastbereich kann es von Vorteil sein, über die intelligente Peripherie 10a die ermittelte Restlebensdauer der Maschine an einer Anzeigeeinheit als Warnanzeige 14 anzuzeigen. Prozeßbedingt kann festgelegt werden, daß es im Überlastbereich keine Abschaltung einer Antriebskomponente gibt, sondern nur die Anzeige der Restlebensdauer als prospektiver Diagnose- und Warnhinweis. Im Kurzschlußfall oder in der Nähe des Kurzschlußfalles hingegen muß sich das Kommunikationsmodul 30 mit dem Kommunikationsmodul 31 abstimmen, weil hier entschieden werden muß, ob es möglich ist, innerhalb des Antriebsblockes eine einzelne Komponente herauszunehmen oder ob dies nicht möglich ist und der gesamte Antriebsblock herausgenommen werden muß. Dies wird durch die übergeordnete Prozeßoptimierung in Form der speicherprogrammierbaren Steuerung 11 entschieden.

Mit dem bekannten Leistungsschalter 17 ist der Motorvollschutz nach VDE 0660 mit einer kontinuierlichen Kennlinie realisiert. Durch die Erfindung wird unterhalb dieser Kennlinienebene ein quasi prozeßoptimierter digitaler Motorschutz mit digitaler Kennlinie (prozeßnah) realisiert. Es kann mit einem Leistungsschalter pro Antriebsblock ausgekommen werden. Die nachgeschalteten Schaltgeräte können entsprechend preiswert ausgeführt werden. Die Verdrahtungs- und Montagekosten können gering gehalten werden durch die Verwendungzweier prozeßnaher Bus-Systeme (Sensor-Bus, SPS-Bus).

## Patentansprüche

1. Anordnung zur Beeinflussung von Schaltgeräten (17,18), die einzelnen Antriebs-Komponenten (4,5,6) sowie Antriebsblöcken (1,2,3), in denen die Antriebs-Komponenten (4,5,6) zusammengefaßt sind, vorgeschaltet sind, so daß wahlweise einzelne Antriebs-Komponenten (4,5,6) oder Antriebsblöcke (1,2,3) abund zuschaltbar sind, wobei dies in Abhängigkeit von Netzzustandsdaten mittels Stromerfassungsmitteln (7) und einer Auswertungseinrichtung (8,9,10a,10b) erfolgt, **dadurch gekennzeichnet**, daß die Antriebskomponenten (4,5,6) prozeßbedingt gekoppelt sind und daß eine Prozeßoptimierungseinrichtung (11) vorgesehen ist, die in Wirkverbindung mit der Auswertungseinrichtung (8,9,10a,10b) steht und entscheidet, welche Antriebskomponenten (4,5,6) überhaupt und in welcher Reihenfolge durch Auslösung der Schaltgeräte (17,18) abgeschaltet werden oder ob der Prozeß mit Antriebskomponenten (4,5,6) bei kalkulierter Überlastung weiter betrieben wird.

2. Anordnung nach Anspruch 1, **dadurch gekennzeichnet**, daß die Auswertung eine Schwellwertauswertung (9) des über einen Schwellwertsensor (7) ermittelten Stromes ist.

3. Anordnung nach Anspruch 1 oder 2, **dadurch gekennzeichnet**, daß der Auswertung (8, 9, 10a, 10b) eine Einrichtung zur Anzeige (13, 14, 15, 16) für entstehende Fehler und/oder prospektive Wartungshinweise für die Antriebsmaschinen (4, 5, 6) nachgeschaltet ist.

4. Anordnung nach Anspruch 1 oder 2, **dadurch gekennzeichnet**, daß die Restlaufzeit einer Antriebsmaschine (4, 5, 6) bei der prozeßbedingten notwendigen Überlastung in Abhängigkeit der Isolierstofflebensdauer der Antriebsmaschine und durch Abzug der Laufzeit der Antriebsmaschine bei bisher ermittelten Temperaturen und bekannten Betriebsbedingungen bestimmt ist.

5. Anordnung nach Anspruch 4, **dadurch gekennzeichnet**, daß als Alterungskriterium die Auswertung der Strangströme nach Betrag und Phase oder die Bewertung der Strangimpedanzen benutzt ist.

6. Anordnung nach einem der vorhergehenden Ansprüche, **dadurch gekennzeichnet**, daß den Antriebskomponenten (4, 5, 6) eines Antriebsblockes (1, 2, 3) ein gemeinsamer Leistungsschalter (17) und den einzelnen Antriebskomponenten Nennlast schaltende, fernbetätigbare Schaltgeräte (18) vorzugsweise Schütze, vorgeschaltet sind.

7. Anordnung nach einem der Ansprüche 2 bis 6, **dadurch gekennzeichnet**, daß der Schwellwertauswertung (9) eine Signalvorverarbeitung (10b) vor- und eine intelligente Peripherie (10a, 28, 12) nachgeschaltet ist.

8. Anordnung nach Anspruch 7, **dadurch gekennzeichnet**, daß die Schwellwertauswertung (9) über einen digitalen Actor-Sensorbus mit der intelligenten Peripherie (10a, 28) und dem intelligenten Leistungsschalter (17) verbunden ist, der seinerseits mit der Prozeßoptimierungseinrichtung (11) in Form einer speicherprogrammierbaren Steuerung und einer CPU (12) in Verbindung steht.

9. Anorndung nach Anspruch 8, **dadurch gekennzeichnet,** daß dem intelligenten Leistungsschalter (17) eine dezentrale Signalvorverarbeitung (IP 2) als Kommunikationsmodul (30, 31) zwischen speicherprogrammierbarer Steuerung mit intelligenter Peripherie (12), Leistungsschalter (17) und Auswerteeinrichtung (8) zugeordnet ist.

## Claims

1. Arrangement for influencing switching devices (17, 18) which are connected in series before individual drive components (4, 5, 6) and drive units (1, 2, 3) comprising individual drive components (4, 5, 6) , so that either individual drive components (4, 5, 6) or drive units (1, 2, 3) can be switched off or on, this being effected by means of current metering facilities (7) and an evaluation device (8, 9, 10a, 10b) in dependence on power supply state data, characterized in that the drive components (4, 5, 6) are coupled as required by process conditions and that there is a process optimization device (11) which is actively connected to the evaluation device (8, 9, 10a, 10b) and decides which drive components (4, 5, 6), if any, are switched off, and in which order, through tripping of the switching devices (17, 18) or whether the process continues to be operated with drive components (4, 5, 6) operating with calculated overload.

2. Arrangement according to Claim 1, characterized in that the evaluation system is a threshold value evaluation system (9) for the current determined by a threshold value sensor (7).

3. Arrangement according to either of Claims 1 or 2, characterized in that connected in series after the evaluation system (8, 9, 10a, 10b) is a display device (13, 14, 15, 16) for displaying developing faults and/or prospective servicing instructions for the drive machines (4, 5, 6).

4. Arrangement according to either of Claims 1 or 2, characterized in that the remaining operating time of a drive machine (4, 5, 6) is determined, in the case of process-necessitated overload, in relation to the service life of the drive machine insulating material and by deducting the operating time of the drive machine using previously determined temperatures and known operating conditions.

5. Arrangement according to Claim 4, characterized in that evaluation of the phase currents according to amount and phase or evaluation of the phase impedances is used as a criterion of ageing.

6. Arrangement according to any one of the preceding Claims, characterized in that a common power circuit breaker (17) is connected in series before the drive components (4, 5, 6) of a drive unit (1, 2, 3) and switching devices (18), preferably contactors, which are capable of being remotely operated and switching nominal load are connected in series before the individual drive components.

7. Arrangement according to any one of Claims 2 to 6, characterized in that the threshold value evaluation system (9) is preceded by a series-connected signal pre-processing system (10b) and followed by a series-connected intelligent peripheral (10a, 28, 12).

8. Arrangement according to Claim 7, characterized in that the threshold value evaluation system (9) is connected through a digital actor sensor bus to the intelligent peripheral (10a, 28) and to the intelligent power circuit breaker (17) which, in turn, is connected to the process optimization device (11) in the form of a programmable controller and a CPU (12).

9. Arrangement according to Claim 8, characterized in that there is assigned to the intelligent power circuit breaker (17) a decentralized signal pre-processing system (IP 2), as a communication module (30, 31) to a programmable controller, with an intelligent peripheral (12), power circuit breaker (17) and evaluation device (8).

## Revendications

1. Dispositif pour agir sur des appareils (17,18) de coupure, en amont desquels sont branchés différents composants (4,5,6) d'entraînement ainsi que des blocs (1,2,3) d'entraînement, dans lesquels les composants (4,5,6) d'entraînement sont rassemblés, de sorte que différents composants (4,5,6) d'entraînement ou blocs (1,2,3) d'entraînement puissent être coupés ou connectés au choix, cela s'effectuant en fonction de données d'état de réseau par des moyens (7) de détection de courant et par un dispositif (8,9,10a,10b) d'exploitation, caractérisé en ce que les composants (4,5,6) d'entraînement sont couplés dans les conditions du processus et il est prévu un dispositif (11) d'optimisation du processus, qui est en liaison active avec le dispositif (8,9,10a,10b) d'exploitation et décide, d'une façon générale les composants (4,5,6) d'entraînement, qui sont coupés par déclenchement des appareils (17,18) de coupure et l'ordre dans lequel ils le sont, ou si le processus continue de s'effectuer avec des composants (4,5,6) d'entraînement, lorsqu'il a été calculé une surcharge.

2. Dispositif suivant la revendication 1, caractérisé en ce que le dispositif d'exploitation est un dispositif d'exploitation (9) d'un seuil du courant détecté par l'intermédiaire d'un détecteur (7) de seuil.

3. Dispositif suivant la revendication 1 ou 2, caractérisé en ce qu'il est branché en aval du dispositif (8, 9,10a,10b) d'exploitation un dispositif d'indication (13,14, 15,16) d'erreurs apparaissantes et/ou d'indication prospective de maintenance pour les machines (4,5,6) d'entraînement.

4. Dispositif suivant la revendication 1 ou 2, caractérisé en ce que le temps de marche résiduel d'une machine (4,5,6) d'entraînement lors de la surcharge nécessaire due au processus est déterminé en fonction de la durée de vie de la matière isolante de la machine d'entraînement et par soustraction du temps de marche de la machine d'entraînement aux températures déterminées jusqu'à présent et dans les conditions connues de fonctionnement.

5. Dispositif suivant la revendication 4, caractérisé en ce qu'il est utilisé comme critère du vieillissement l'exploitation des courants de fuite en module et en phase ou l'exploitation des impédances de fuite.

6. Dispositif suivant l'une des revendications précédentes, caractérisé en ce qu'il est branché en amont des composants (4,5,6) d'entraînement d'un bloc (1,2,3) d'entraînement un disjoncteur (17) commun et en amont des différents composants d'entraînement, des appareils (18) de coupure, d'interruption ou de connexion à la charge nominale et actionnables à distance, de préférence des contacteurs.

7. Dispositif suivant l'une des revendications 2 à 6, caractérisé en ce qu'il est branché en amont du dispositif (9) d'exploitation de seuil un dispositif (10b) de prétraitement du signal et en aval du dispositif (9) d'exploitation de seuil, un périphérique intelligent (10a, 28,12).

8. Dispositif suivant la revendication 7, caractérisé en ce que le dispositif (9) d'exploitation de seuil est relié par l'intermédiaire d'un bus numérique acteur-détecteur au périphérique intelligent (10a, 28) et au disjoncteur (17) intelligent, qui est en liaison pour sa part avec le dispositif (11) d'optimisation du processus sous forme d'une commande programmable par mémoire et d'une unité (12) centrale de traitement.

9. Dispositif suivant la revendication 8, caractérisé en ce qu'il est associé au disjoncteur (17) intelligent un dispositif (IP 2) décentralisé de prétraitement du signal en tant que module (30, 31) de communication entre la commande programmable par mémoire ayant le périphérique (12) intelligent, le disjoncteur (17) et le dispositif (8) d'exploitation.
